(19) Europäisches Patentamt
European Patent Office
Office européen des brevets

(11) Veröffentlichungsnummer: **0 212 154 A1**

# (12) EUROPÄISCHE PATENTANMELDUNG

(21) Anmeldenummer: **86108815.1**

(51) Int. Cl.⁴: **C08G 65/48**

(22) Anmeldetag: **28.06.86**

(30) Priorität: **17.08.85 DE 3529558**

(43) Veröffentlichungstag der Anmeldung: **04.03.87 Patentblatt 87/10**

(84) Benannte Vertragsstaaten: **AT BE CH DE FR GB IT LI NL**

(71) Anmelder: **HÜLS AKTIENGESELLSCHAFT**
**- RSP Patente / PB 15 - Postfach 13 20**
**D-4370 Marl 1(DE)**

(72) Erfinder: **Grundmann, Raban, Dr.**
**Ludwigshafener Strasse 6**
**D-4370 Marl(DE)**

## (54) Verfahren zur Chlormethylierung von Polyphenylenethern.

(57) Polyphenylenether lassen sich ohne gleichzeitige Kernchlorierung chlormethylieren durch Einwirkung von Chlorwasserstoff und (Para) Formaldehyd in Gegenwart einer Carbonsäure.

EP 0 212 154 A1

## Verfahren zur Chlormethylierung von Polyphenylenethern

Die Polyphenylenether (PPE), welche man gemäß US-PSS 3 306 874 und 3 306 875 oder auch DE-OS 33 13 864 aus alkylsubstituierten Phenolen durch oxidierende Kondensation herstellt, sind wohlbekannte Stoffe. Sie finden vorzugsweise Anwendung in Kunststoffabmischungen, insbesondere mit Polystyrol.

Eine Modifizierung der anwendungstechnischen Eigenschaften von Polymeren ist durch Einführung von funktionellen Seitengruppen möglich. Solche Gruppen können besonders günstig durch nukleophile Substitution in chlor-oder brommethylierte Zwischenprodukte eingeführt werden.

PPE, die Chlormethylgruppen enthalten, werden üblicherweise durch radikalische Chlorierung der Alkylsubstituenten hergestellt (US-PS 3 334 069). Bei dieser Arbeitsweise ist eine teilweise Chlorierung des aromatischen Kerns jedoch nicht vollständig auszuschließen. Kerngebundene Chloratome lassen sich aber nicht durch nukleophile Substitution austauschen und sind deswegen in den Zwischenprodukten unerwünscht.

Zwar ist die Chlormethylierung von Aromaten, insbesondere von Alkylaromaten, eine gut bekannte Reaktion, die z.B. häufig zur Modifizierung von Polystyrol herangezogen wird. Dabei erhält man jedoch mehr oder weniger vernetzte Produkte, sofern man nicht extrem verdünnte Lösungen einsetzt (J. Cabasso u. a., J. Appl. Polym. Sci., Vol. 18, S. 1973).

Aus diesem Stand der Technik war daher weder herzuleiten, daß es möglich sein könnte, chlormethylierte PPE zu gewinnen, die frei von Kernchlorierungen und Vernetzungen sein würden, noch, daß man dieses Ziel auf einem bequemen Weg erreichen könnte.

Daher war es überraschend, daß man anspruchsgemäß durch Umsetzung von PPE mit Chlorwasserstoff und Formaldehyd unter praxisnahen Reaktionsbedingungen lösliche Chlormethylierungsprodukte von PPE erhalten kann. Es war vor allem nicht zu erwarten, daß diese Umsetzungen in den für Halogenmethylierungen bevorzugten Carbonsäuren bis zu einem hohen Chlormethylierungsgrad geführt werden können, weil sich die PPE in Carbonsäuren kaum lösen; die Umsetzung erfolgt vielmehr überraschend zum großen Teil am suspendierten Polymeren.

Als Ausgangsstoff für die Chlormethylierung eignen sich PPE der allgemeinen Formel:

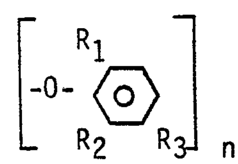

mit $R_1$, $R_2$ = Methyl, Ethyl, Propyl, oder Butyl
$R_3$ = H oder $R_1$, $R_2$
n = 3 bis 600

Insbesondere setzt man Poly(2.6-dimethyl-1.4-phenylen)-ether mit einem Polymerisationsgrad n = 10 bis 300 ein.

Das Molgewicht brauchbarer PPE ist grundsätzlich nicht begrenzt. Einsetzbar sind PPE mit Lösungsviskositäten zwischen J = 0.1 und 0.9 dl/g; vorzugsweise liegt die Lösungsviskosität zwischen 0.4 und 0.65 dl/g, gemessen in Chloroform bei 30 °C.

Als Reaktionsmedium verwendet man ganz allgemein aliphatische oder aromatische Carbonsäuren mit 2 bis 12 Kohlenstoffatomen, z. B. Essigsäure, Propionsäure, Buttersäure, Chloressigsäure, Benzoesäure. Auch Mischungen mit weiteren Lösungsmitteln, wie Chlorkohlenwasserstoffen, Ethern, Estern, Kohlenwasserstoffen, Schwefelkohlenstoff oder Wasser, führen zu guten Ergebnissen. Vorzugsweise arbeitet man in Essigsäure, Propionsäure oder einer Essigsäure/Chloroform-Mischung. Die eingesetzte Menge an flüssigem Reaktionsmedium beträgt das 2-bis 20fache der PPE-Menge, vorzugsweise das 5-bis 10fache.

PPE sind bei den beanspruchten Reaktionsbedingungen im allgemeinen unlöslich. Aus diesem Grunde arbeitet man in Suspension, so daß es empfehlenswert ist, PPE in zerkleinerter Form, etwa mit Teilchengrößen von 2 bis 200 µm, vorzugsweise 5 bis 50 µm, einzusetzen. PPE von niedrigem MG können , insbesondere bei großer Verdünnung und erhöhter Temperatur, auch überwiegend oder teilweise gelöst sein.

Den Formaldehyd kann man sowohl gasförmig als auch in gelöster Form, insbesondere jedoch in fester, polymerer Form, als Paraformaldehyd, dem Reaktionsgemisch zusetzen. Es ist möglich, die

Gesamtmenge zu Beginn der Reaktion mit den PPE vorzulegen oder aber im Verlauf der Reaktion kontinuierlich oder portionsweise Formaldehyd nachzudosieren. Pro Phenyleneinheit setzt man 0.02 bis 4 mol Formaldehyd, vorzugsweise 1 bis 2.5 mol, zu.

Der Chlorwasserstoff wird vorzugsweise gasförmig vor und/oder während der Reaktion zudosiert. Besonders vorteilhaft verläuft die Chlormethylierung bei erhöhtem HCl-Partialdruck, der bis zu 20 bar betragen kann. Pro mol Phenylenethermonomer setzt man 0.01 bis 10 mol HCl, vorzugsweise 1 bis 4 mol, zu.

Als Reaktionstemperatur für die Chlormethylierung eignet sich der Bereich von 20 bis 150 °C, vorzugsweise von 60 bis 130 °C, insbesondere von von 80 bis 120 °C. Katalysatoren, die die Chlormethylierung fördern, sind z. B. $ZnCl_2$, $AlCl_3$, $H_2SO_4$ oder $H_3PO_4$. Sie werden dem Ansatz mit 0.2 bis 10 %, vorzugsweise 0.4 bis 4 %, bezogen auf PPE, zugesetzt.

Man trennt das chlormethylierte PPE durch Filtration oder Zentrifugieren von der flüssigen Phase. Lösliche Anteile kann man durch Einengen oder durch Zusatz von Wasser, Methanol oder Petrolether ausfällen. Den Feststoff kann man mit verdünnter Sodalösung und Wasser neutral waschen und trocknen. Zur Reinigung kann man eine Umfällung vornehmen, indem man beispielsweise Chloroform als Lösungsmitel und Methanol als Fällungsmittel verwendet.

Die Reaktionsprodukte weisen Chlorgehalte von 1 bis 20 % auf, vorzugsweise von 5 bis 15 %. Die thermische Stabilität, gemessen auf einer Thermowaage (Heizrate 10 °C/Min.), ist größer als 250 °C. Der Gewichtsverlust bis 275 °C beträgt 1 bis 2 %, der erste Zersetzungsbereich liegt zwischen 300 und 350 °C. Je nach Chlorgehalt tritt in diesem Bereich ein Gewichtsverlust von 2 bis 20 % auf.

Produkte mit niedrigem Chlorgehalt (ca. 10 %) sind in Lösemitteln wie Methylenchlorid, Tetrahydrofuran oder Toluol löslich und lassen sich durch Umfällen reinigen. Die Produkte stellen weiße bis gelbliche Feststoffe dar. Das clormethylierte PPE kann als Zwischenstufe zur Herstellung von funktionalisierten Polymeren eingesetzt werden. Bevorzugte Austauschreaktion ist die nukleophile Substitution.

## Beispiel 1

Man suspendiert 144 g (1.2 mol, bezogen auf Monomer) feingepulverten Poly(2.6-dimethyl-1.4-phenylen)ether mit einer Lösungsviskosität von J = 0.6 dl/g in $CHCl_3$ bei 30 °C und 54 g (1.8 mol) Paraformaldehyd in 2 l Essigsäure und sättigt die Mischung bei Raumtemperatur mit trockenem HCl-Gas. Im Verlauf von 6 Stunden steigert man die Temperatur langsam auf 105 °C und hält sie 6 weitere Stunden unter Einleiten von HCl auf 105°C. Insgesamt dosiert man 150 g HCl (ca. 4 mol) zu. Nach dem Abkühlen filtriert man den ausgefallenen Feststoff ab und wäscht mit viel Wasser neutral. Man löst das Produkt in einem Liter Methylenchlorid und fällt es in 4 l Methanol aus. Man trocknet es bei 50 °C im Vakuumschrank.

Ausbeute: 153.8 g weißer Feststoff, Chlorgehalt 6.8 %.

## Beispiel 2

Man suspendiert 240 g (2 mol, bezogen auf Monomer) Poly(2.6-dimethyl-1.4-phenylen)ether (J = 0.33 dl/g) in 2.5 l Propionsäure und versetzt mit 60 g (2 mol) Paraformaldehyd und 5 g $ZnCl_2$. Man sättigt die Mischung bei Raumtemperatur mit HCl-Gas (2 Std.), heizt dann auf 60 bis 80 °C auf (2 Std.) und hält anschließend 10 Std. auf 100 °C. Während der Umsetzung leitet man ständig einen - schwachen HCl-Strom durch die Mischung.

Nach dem Abkühlen setzt man nochmals 60 g (2 mol) Paraformaldehyd und 5 g $ZnCl_2$ zu, und unter Einleiten von HCl heizt man erneut bis auf 110 °C auf und rührt 10 Std. bei dieser Temperatur nach. Insgesamt leitet man 275 g HCl (7.5 mol) ein.

Nach dem Abkühlen filtriert man den Feststoff ab, wäscht neutral und trocknet. Man erhält 295 g hellbeigen Feststoff, mit einem Chlorgehalt von 16.8 % (d. h. ca. 75 % der Phenylenringe enthalten eine Chlormethylgruppe).

Die Thermogravimetrie des Produktes ergibt - (Heizrate: 10 °C/Min., Atmosphäre: $N_2$):

| | | | | | | | |
|---|---|---|---|---|---|---|---|
| Temperatur: | 250 °C | 275 °C | 300 °C | 325 °C | 350 °C | 375 °C | 400 °C |
| Gewichtsverlust: | 0.5 % | 1 % | 2 % | 6 % | 14 % | 16 % | 18 % |

Beispiel 3

Man löst 120 g (1 mol, bezogen auf Monomer) PPE (J . = 0.33 dl/g) in 750 ml Chloroform und versetzt mit 400 ml Essigsäure. Man erhält bei 50 bis 60 °C eine klare Lösung. Nach Zugabe von 30 g (1 mol) Paraformaldehyd sättigt man bei 50 bis 60 °C während 6 Stunden mit HCl-Gas, setzt anschließend nochmals 30 g Paraformaldehyd und 2 g $ZnCl_2$ zu und leitet weitere 6 Stunden bei 60 °C HCl ein. Nach dem Abkühlen bläst man überschüssiges HCl mit $N_2$ aus und fällt das Chlormethylierungsprodukt durch Einrühren in 2 l Methanol. Man filtriert, wäscht mit Methanol nach und trocknet bei 50 °C im Vakuumschrank. Das Produkt ist in Methylenchlorid oder Tetrahydrofuran (ca. 20 Gew.-% Feststoff) löslich.

Ausbeute: 133 g Chlorgehalt: 11.4%

**Ansprüche**

1. Verfahren zur Chlormethylierung von Polyphenylenethern,

dadurch gekennzeichnet,

daß man einen Polyphenylenether der allgemeinen Formel

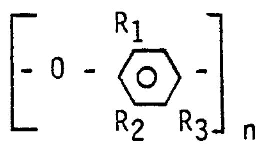

mit $R_1$, $R_2$ = Methyl, Ethyl, Propyl, Butyl
$R_3$ = H oder $R_1$, $R_2$
n = 3 bis 600

in Gegenwart einer Carbonsäure mit Formaldehyd oder Paraformaldehyd und Chlorwasserstoff bei 20 bis 150 °C umsetzt und pro Phenylkern 0.02 bis 1 Chlormethylgruppe einführt.

2. Verfahren nach Anspruch 1,

dadurch gekennzeichnet,

daß man Poly(2.6-dimethyl-1.4-phenylen)ether mit einem Polymerisationsgrad n = 10 bis 300 einsetzt.

3. Verfahren nach Anspruch 1 und 2,

dadurch gekennzeichnet,

daß man die Umsetzung in Essigsäure oder Propionsäure durchführt.

4. Verfahren nach Anspruch 1 bis 3,

dadurch gekennzeichnet,

daß man die Umsetzung in Gegenwart eines sauren Katalysators wie $ZnCl_2$ durchführt.

5. Chlormethylierte Polyphenylenether, hergestellt nach einem Verfahren gemäß Anspruch 1 bis 4.

Europäisches Patentamt

# EUROPÄISCHER RECHERCHENBERICHT

Nummer der Anmeldung

EP 86 10 8815

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 115 641 (BAYER) * Ansprüche; Seite 4, Zeilen 6-18 * --- | 1-5 | C 08 G 65/48 |
| Y | EP-A-0 141 055 (HULS) * Ansprüche * --- | 1-5 | |
| A | CHEMICAL ABSTRACTS, Band 76, Nr. 8, 21. Februar 1972, Seite 15, Zusammenfassung Nr. 34780p, Columbus, Ohio, US; Yu.P. VOROB'EV et al.: "Thermosetting resins prepared from formaldehyde and bisphenols containing a poly(p-phenylene oxide) structure", & VYSOKOMOL. SOEDIN. SER. A 1971, 13(8), 1691-700 * Zusammenfassung * --- | 1 | |
| | | | RECHERCHIERTE SACHGEBIETE (Int. Cl.4) |
| A | CHEMICAL ABSTRACTS, Band 90, 1979, Seite 21, Zusammenfassung Nr. 55565b, Columbus, Ohio, US; E.E. ERGOZHIN et al.: "Chloromethylation of poly(phenylene oxide)", & IZV. AKAD. NAUK. KAZ. SSR. SER. KHIM. 1978, 28(5), 63-6 * Zusammenfassung * --- -/- | 1 | C 08 G |

Der vorliegende Recherchenbericht wurde für alle Patentansprüche erstellt.

| Recherchenort | Abschlußdatum der Recherche | Prüfer |
|---|---|---|
| DEN HAAG | 24-10-1986 | DERAEDT G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches Patentamt

# EUROPÄISCHER RECHERCHENBERICHT

Nummer der Anmeldung

EP 86 10 8815

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-1 038 181 (GENERAL ELECTRIC)<br>* Ansprüche *<br>--- | 1 | |
| A | FR-A-1 358 303 (BERGWERKSVERBAND)<br>* Zusammenfassung *<br>----- | 1 | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 24-10-1986 | DERAEDT G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument